# EUROPEAN PATENT SPECIFICATION

(11) **EP 3 299 080 B1**
(45) Date of publication and mention of the grant of the patent: **06.11.2019**
(21) Application number: 16190657.3
(22) Date of filing: 26.09.2016
(51) Int. Cl.: B01D 53/58

(54) **METHOD FOR CONTROLLING AMMONIA CONTENT IN CEMENT FLUE GAS AND CEMENT PLANT WITH CONTROLLED AMMONIA EMISSION**
VERFAHREN ZUR KONTROLLE DES AMMONIAKGEHALTES IN ZEMENTABGAS UND ZEMENTFABRIK MIT KONTROLLE DER AMMONIAKEMISSION
PROCÉDÉ DE CONTRÔLE DU TAUX D'AMMONIAC DANS LES GAZ DE COMBUSTION DE CÉMENT ET USINE DE CÉMENT AVEC ÉMISSION D'AMMONIAC CONTRÔLÉE

(43) Date of publication of application: 28.03.2018
(73) Proprietor: HeidelbergCement AG, 69120 Heidelberg (DE)
(72) Inventor: MAJCHROWICZ, Marek, 47-143 Olszowa (PL); CAMBIER, Pierre-Olivier, 1320 Hamme-Mille (BE)
(74) Representative: Zellentin & Partner mbB Patentanwälte

(56) References cited:
- WO-A1-01/66233
- WO-A1-2006/095261
- DE-C1- 4 313 479
- US-A- 5 137 704
- US-A- 6 060 030
- US-A- 6 156 277
- US-B2- 8 383 073

## Description

The present invention relates to a method for controlling ammonia content in flue gas from a cement plant and to a plant with controlled ammonia emission.

Ever increasing restrictions on the content of harmful substances in flue gas are a challenge for the cement industry. Among the substances that should not be present in excess of fixed limits in flue gas vented from the plant are heavy metals, nitrogen oxides (NOₓ) and sulfur oxides. A multitude of proposals for their control exists and is in use.

For other substances the limits have been decreased recently, for example for ammonia. Ammonia is often contained in raw materials and fuels on the one hand and may also be added to reduce NOₓ on the other. Ammonia is inherently reduced in the process by absorption on alkaline components of the raw meal and by burning to NOₓ in the calciner and at the kiln entrance. But those processes might not eliminate ammonia sufficiently when high amounts of ammonia are present. Further, the ammonia emission becomes especially problematic when the raw meal grinding stage is not active, because then the exhaust gas of the preheater/calciner does not pass through the mill which constitutes the main area of ammonia absorption onto the alkaline components in the raw meal.

The problem is more acute with calcium sulfoaluminate cement (C$A) than with Portland Cement (OPC), because C$A can incorporate more alternative raw materials. Some of these alternative raw materials contain substantial amounts of ammonia or ammonia compounds. Ammonia present in raw materials is evaporated during raw material grinding and raw meal burning. A significant quantity of ammonia may remain unburnt. Above a certain quantity of ammonia in the exhaust gas its emission may violate local emission limits and, thus, has to be reduced to beneath the locally valid limits.

Difficult, i.e. verly low, limits for ammonia are relatively new, so there are not many solutions for controlling it in cement plant exhaust gas. The proposals that have been made relate to a control of ammonia slip from NOₓ removal. Most foresee a strict regulation of the amount of ammonia added for control of NOₓ, see e.g. US 5,510,092 A or DE 43 13 479 C1. US 2009/0252665 A1 describes a control of ammonia slip from a non catalytic reduction of NOₓ by adding a catalytic oxidation of the ammonia in fossil fuel fired boilers. Not prior published application EP 15001227.6 (EP 3 085 431 A1) proposes a non catalytic reduction of NOₓ of the kiln exhaust gas before entering the preheater using an adequate excess of ammonia combined with a combination of a catalytic oxidation of the ammonia and a gas conditioning in the exhaust gas from the preheater/calciner. However, installation of catalytic stages means high investment costs. US 5,137,704 A discloses keeping a surplus of ammonia in the exhaust gas from a cement plant in order to ensure effective denitrification, and then reducing the ammonia content by reaction with residual NOₓ and desulfurization products, thereby forming NH₃-containing solids which are separated from the gas to provide an exhaust gas with a reduced level of ammonia. The strict control of added ammonia is meaningless when the ammonia is introduced by the raw materials. Thus, there is still a need for a simple method to control ammonia that also covers ammonia brought into the system with the raw materials.

Surprisingly it was now found that ammonia in the kiln exhaust gas can effectively be captured by sulfur dioxide, whereby the formed ammonium sulfate is separated from the plant exhaust gas in the filter for holding back dust, from where it can be returned into the preheater/calciner or directly to the kiln or used in any other way.

It is well known to add ammonia for capturing sulfur oxides, see e.g. H. Bai et al., "SO2 removal by NH3 gas injection ...", Ind. Eng. Chem. Res. 1994, 33, 1231-1236 and DE 10 2013 008 756 A1. In principle it is also known that the formed products ammonium sulfate, ammonium sulfite and other ammonium sulfur compounds will deposit as solids when the temperature of the gas falls below a certain limit. However, up to now it was not contemplated to make use of this reaction for controlling ammonia. It seems possible that ammonia has always been considered the lesser evil compared to SO₂.

Thus, the above problem is solved by a method of controlling an ammonia content in the exhaust gas from a cement manufacturing plant wherein the exhaust gas produced during sintering a raw meal to form a cement clinker is passed into a conditioning stage in which an amount of SO₂ is adjusted that suffices for reducing the ammonia to the desired level. Thereby, ammonia which is introduced via the raw meal and ammonia added for decreasing NOₓ in a selective catalytic reduction (SCR) stage and/or a selective non-catalytic reduction (SNCR) stage can be captured and its content controlled. The object is further solved by a cement manufacturing plant comprising a raw material mill for grinding a raw material to provide a raw meal, a preheater or a preheater/calciner for preheating or preheating and calcining the raw meal, a kiln for sintering the raw meal to a clinker, a cooler for cooling the clinker and a dedusting filter for separating a gaseous stream from the preheater and/or the raw material mill into a solid dust and an exhaust gas, characterized in that a conditioning unit receiving an adjusted amount of SO₂ and equipped with a device for measuring the content of ammonia and SO₂ in the gaseous stream from the preheater and/or the raw material mill is arranged before the dedusting filter or made integral with the dedusting filter.

Ideally, the amount of SO₂ adjusted in the conditioning unit matches the amount required for reaction with the amount of ammonia in the gaseous stream. I.e. about stoichiometric amounts of ammonia and SO₂ are present in the conditioning unit. Thus, preferred ratios of SO₂ to ammonia are from 1:2.5 to 1:1.5, more preferred from 1:2.2 to 1:1.8 and especially preferred from 1:2.1 to 1:1.9.

When the content of SO₂ exceeds the amount needed for reaction with ammonia, the SO₂ in the exhaust gas can be decreased with the methods known per se, e.g. wet scrubbing, to below the allowed maximum amount.

The formed ammonium sulfur compounds are captured in the dust filter as solid material. They can advantageoulsy be recycled into the raw meal that enters the preheater/calciner and/or the kiln or recycled into burner units together with primary fuels. Thereby, they return the sulfur back into the process.

The addition of the ammonium sulfur compounds into the preheater/calciner may also decrease NOₓ via SNCR in regions with the appropriate temperature for that process. Otherwise, ammonia liberated from the ammonium sulfur compounds is prone to be burnt to NOₓ in the kiln and will be removed from the exhaust gas together with any NOₓ formed from nitrogen from the combustion air and other sources with methods known as such, typically SNCR or SCR.

The invention is based on the same principles as the wet scrubbing of SO₂ or dry desulfurization and can be summarized as:

2NH₃(g) + SO₂(g) + ½O₂(g) + H₂O(g) ⇔ (NH₄)₂SO₄ (s)

wherein g indicates gas and s indicates solid. The ammonium sulfur compounds are often designated ammonium sulfate herein for convenience, it being clear that the actually formed compounds can also have hydrogen sulfate, sulfite, hydrogen sulfite and other sulfur anions as the anion and can contain varying amounts of water, see Bai et al, "SO2 Removal ...", mentioned above.

The cement produced can be any kind of cement, preferably it is Portland cement or calcium sulfoaluminate cement, most preferably it is calcium sulfoaluminate cement. Calcium sulfoaluminate cement designates cements that rely on ye'elimite as at least one of the major strength providing phases. C$A may comprise substantial amounts of belite and/or ternesite and is then sometimes designated calcium sulfoaluminate belite cement (C$AB) or belite calcium sulfoaluminate ternesite cement (BCT), respectively. Unless otherwise stated the term C$A herein means any calcium sulfoaluminate cement, i.e. the term C$A comprises cements that could be designated more specifically as C$AB or BCT.

In one embodiment, especially for manufacturing C$A where sulfur (e.g. sulphide) is a raw material, a content of sulfur sources is adjusted in the raw meal and/or in the fuel fed to the kiln burner and/or the calciner burner so that a sufficient level of SO₂ for reaction with ammonia is formed during sintering and contained in the gaseous stream leaving the preheater or preheater and calciner. The required SO₂ for ammonia absorption can also be delivered from decomposition of alternative raw materials that contain e.g. pyrite (FeS₂). Such materials can be added to the clinker raw meal on purpose. In other words the pollutant SO₂ is deliberately generated in a sufficient excess to reduce ammonia via reaction with it forming ammonium sulfur compounds.

Sulfur dioxide can also be generated during the clinker production process by burning a fuel in the kiln and/or calciner very close to stoichiometric conditions. Such operation is well known in cement clinker manufacturing where it is not desired but often happening. Operation close to stoichiometric or even sligtly below stoichiometric conditions is locally generating carbon monoxide which reacts with sulphate minerals (or other sulfur containing materials) present in the raw material and clinker and liberates SO₂ from them.

As an alternative or additional source of SO₂, sulfur or sulfur compounds, preferably liquid or solid sulfur, can be burnt in a separate reactor and the combustion gas or part of it is used to react with the ammonia. Remaining SO₂ can be sent to e.g. C$A clinker production, for example into the kiln main burner or into the calciner burner. Providing SO₂ in this way is especially suitable for OPC and other cements that do not need sulfur in the raw materials. Still another possibility is to provide SO₂ from a storage means according to need, either as an alternative to the previously mentioned sources or as an additional source. Both embodiments are especially advantageous for fine tuning the amount of SO₂ received in the conditioning stage. Further, both SO₂ sources are useful as a fall back when high amounts of ammonia occur, e.g. during so called direct mode.

When C$A clinker is the target product, sulfur dioxide is preferably delivered from the burning process in the kiln where sulfur plays an important role.

The ammonium sulphate obtained in the conditioning unit or dedusting filter can be passed into the main burner of the kiln. There, due to destruction of (NH₄)₂SO₄ (s), sulfur will return to the clinker and ammonia will be burnt to NOₓ. NOₓ emission will be treated by available technologies. It would also be possible to return the ammonium sulphate into the calciner system (fuel feed) that is part of modern cement clinker production plants. Finally, ammonium sulphate can also be discarded.

Preferably, a modern kiln system with cyclone calciner and preheater is used. The raw meal is fed to the plant under the top cyclone. Especially when C$A clinker is made, alternative raw materials typically constitue a major amount of the raw materials. But this may likewise apply in production of OPC or other cements clinkers. Some of these alternative raw materials may contain ammonia salts. Thus, additional ammonia is released in upper stages of the preheater system, because ammonia salts are decomposed at low temperatures. The NOₓ generated by the kiln system during cement clinker production will typically be treated by ammonia injection using a SNCR installation. This process takes place in a high temperature zone at 800 - 900°C without catalysts. There may be some ammonia slip due to that. Both NOₓ and ammonia will be present at the exit of e.g. the bottom cyclone. No further interaction between both gases is expected.

In contrast to standard OPC clinker production an absorption of ammonia onto the raw meal in the raw material mill is usually insufficient during C$A raw meal production, due to much higher presence of ammonia salts. Additionally, for both C$A and OPC there exists the known problem of times during which the raw material mill is stopped, so called direct mode, and the process of capturing ammonia on raw materials ceases completely.

Therefore, before the kiln dedusting system the ammonia slip from the SNCR (or a SCR) and the ammonia from the raw meal (grinding) and the remaining NOₓ are present in the gaseous stream. According to the invention, a conditioning unit is foreseen for reaction of ammonia with SO₂. The conditioning unit is either integrated into the plant dedusting filter or provided as separate unit directly before the filter. The conditioning unit comprises a measuring device for the content of ammonia and SO₂ in the gaseous stream that enters the unit or is inside it. It further receives SO₂ from any of the sources described previously. In embodiments, where the SO₂ is generated in the kiln and/or calciner, e.g. from raw materials, it is already present in the gaseous stream. When SO₂ is added from a separate reactor or storage means, it will usually be added via a feeding means directly to the conditioning unit. In all cases SO₂ gas is delivered to the gaseous stream, when the measured amount contained in it is too low. Reaction between ammonia and SO₂ takes place within the conditioning unit or kiln filter, respectively.

Removal of sulfur dioxide from gas streams takes place in high rate at temperatures above 54°C. The removal rate is above 95 % at temperatures below 85°C. Thus, the ideal operating window for the conditioning unit is from 54 to 85 °C. A typical operating temperature of the raw material mill is about 90 °C. Typical temperatures in the dedusting filter is also close to 90°C depending on the design of the gas flow circuit behind the kiln and raw material mill. Temperatures of about 90°C provide a safety margin for the down stream equipment - e.g. kiln filter and/or others - while water due point of exhaust gas in such places is usually about 60 °C. It was proven during a production trial that at temperatures of about 82 °C the removal efficiency is enough to reduce both ammonia and sulfur emission below the emission limits. Therefore, the temperature in the conditioning unit is preferably adjusted to lie in a range from 60 to 95 °C, more preferred from 70 to 90 °C.

Preferably the amounts of ammonia and SO₂ are close to stoichiometric, so that emission of both ammonia and SO₂ is very low. If circumstances are expected wherein the amounts are not close to stoichiometric, a final absorption unit for one or both gases, e.g. a wet scrubber, is provided behind the dedusting filter.

The ammonium sulfur compounds obtained can be sent back to the kiln feed (raw meal), directly into the kiln inlet or even to the kiln and/or calciner burner. However, to avoid a heavy cycling effect a part of the ammonium sulfur compounds have to be discharged and used otherwise, e.g. used later as raw material. Return of sulfur compounds to the kiln inlet provides a partial NOₓ reducing process similar to SNCR. Ammonium salts fed to the main burner are most likely burnt to NOₓ.

NOₓ is preferably reduced by ammonia in a SNCR and/or SCR stage as is well known in the art. Due to this process additional ammonia may be present in the gaseous stream that leaves the preheater/calciner. The method according to the invention advantageously also controls this ammonia, so that NOₓ reduction can be operated with more ammonia, because any ammonia slip is captured. For SNCR and SCR one typically feeds ammonia or an ammonia providing compound to the gas that shall be treated. One often used ammonia providing compound is urea solution, but any other material providing ammonia under the conditions in the SNCR or SCR stage is also possible and useful, e.g. ammonia containing waste products. The SNCR stage is usually arranged between the preheater/calciner and the kiln, optionally integrated within the preheater/calciner or the kiln.According to the invention it has to be placed before the conditioning unit.

The invention will be illustrated further with reference to the attached figures, without restricting the scope to the specific embodiments described. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a compositin does not comprise a particular material, i.e. the compostion comprises 0 weight percent of such material.

### Brief description of the figures

Figure 1 shows a first embodiment of a plant according to the invention
Figure 2 shows a second embodiment of a plant according to the invention
Figure 3 shows a third embodiment of a plant according to the invention
Figure 4 shows a fourth embodiment of a plant according to the invention.

The Figures show cement plants according to the invention that use the method for controlling ammonia according to the invention. Gas flows are shown with solid arrows and material flows are shown with frame arrows. Optional flows and units are shown with dashed lines. As usual, gas flows and solid material flows pass through the plant in a counter current to make use of heat exchange for saving energy.

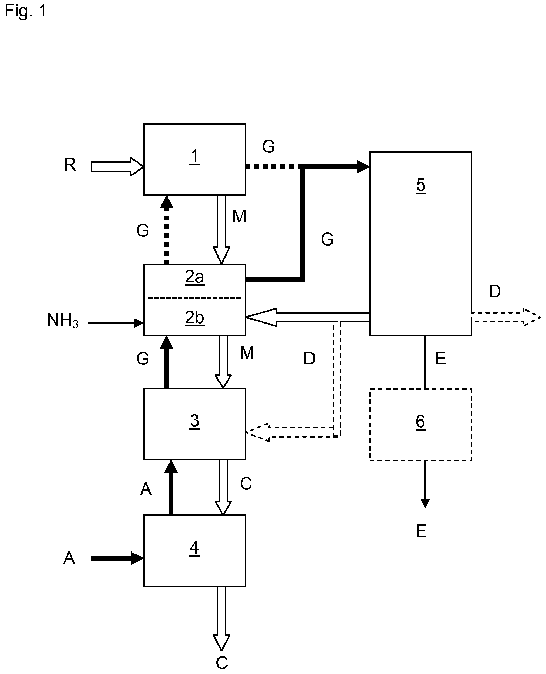

In Figure 1 the raw materials R are fed to a mill 1 for grinding them to provide a raw meal M. The raw meal M is fed to a preheater 2a and calciner 2b. As usual, the raw meal M can also first or additionally be stored in raw meal silos. In the embodiment shown, ammonia or an ammonia providing composition is fed before the lowest stage of the preheater/calciner (last stage before the transfer to the kiln), where temperature is adequate for SNCR. Thus, a major part of the NOₓ contained in the air A coming from the kiln 3 reacts with ammonia and is removed from the gas stream. SNCR could also take place in a separate unit or in the upper part of the kiln 3 as known per se. Inside the preherater/calciner 2 the raw meal M is preheated and limestone is calcined.

The preheated and calcined raw meal M passes into the kiln 3 where it is sintered to a clinker C. The air A for burning fuel (classic and/or alternative fuel) in the kiln 3 is coming from a cooler 4. The amount of air A is chosen so that the fuel is burnt under approximately stoichiometric or slightly below stoichiometric conditions. Thereby, the required amount of SO₂ is generated in parallel to sintering the raw meal M and present in the air A leaving the kiln 3. The clinker C passes into the cooler 4 that is fed with air A for cooling it. The cooled clinker C can be processed further in a known manner. In the case of BCT clinker production a tempering unit is typically foreseen between kiln 3 and cooler 4 to provide a tempering time at between 1200°C and 750°C of the intermediate clinker leaving the kiln 3 that is necessary to obtain enough ternesite.

In the embodiment shown, gaseous stream G from the preheater/calciner 2 can be passed into the raw material mill 1 (or to any other suitable point) to dry the raw materials R. If that is not desired or during operation in the direct mode the gaseous stream G passes directly to the conditioning unit 5, which is here integrated with the dedusting filter. This unit 5 is typically an usual fabric filter or an electrostatic precipitator for separating dust from the gaseous stream G. According to the invention the amount of SO₂ received in the unit 5 is contained in gaseous stream G to react with the ammonia contained. To this end, a usual measuring device is installed that monitors the ammonia and the SO₂ content and SO₂ generated during burning is adjusted by the amount of sulfur sources fed to the kiln and the amount of fuel according to need.

Dust D containing the ammonium sulfur compounds formed by reaction of ammonia with SO₂ is fed to the calciner 2b or to the kiln 3. Thereby, the dust D can introduce the needed sulfur for generating SO₂.The dust D can be discharged from time to time as indicated by the dashed arrow and used otherwise. For example, ammonium sulfate is useful as fertilizer. The exhaust gas E leaving the conditioning unit and filter 5 can - when needed - be passed through a further purification unit 6, e.g. a wet scrubber, to remove SO₂.

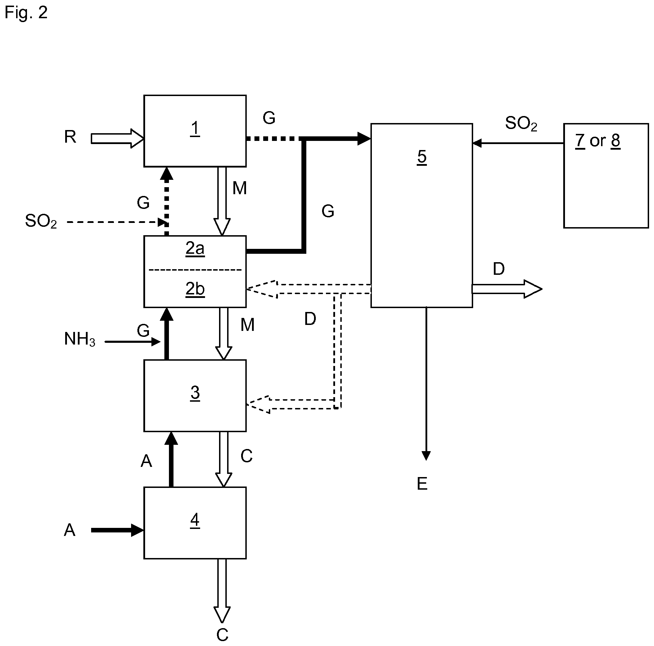

Figure 2 shows an alternative embodiment of a cement plant according to the invention. Many devices and steps are the same as in Figure 1, have the same reference signs and are not described again. The plant in Figure 2 differs from the plant in Figure 1 in the point of addition of ammonia sources for reduction of NOₓ and in the mode of SO₂ supply. Ammonia or a material providing ammonia is fed to the air A passing into the preheater/calciner.

The SO₂ received in the conditioning unit 5 is here at least mainly provided from a separate reactor 7 or a storage means 8. This mode of supply allows faster and more specific adjustment of the amount of SO₂ received in unit 5. Therefore, a purification unit 6 is not needed, but it can of course be foreseen. As shown, the SO₂ is usually fed directly into the conditioning unit 5, but can also alternatively or additionally be fed to the gaseous stream G passing into the raw material mill 1. Yet another possibility (not shown) is feeding SO₂ to the gaseous stream G entering the combined conditioning unit and dedusting filter 5. With feeding to the conditioning unit 5 also embodiments are comprised, where the SO₂ is added to conduits passing the gas G into the conditioning unit 5. Likewise, a feeding to the raw material mill 1 instead of addition to the gaseous stream G passed into the mill 1 is envisaged.

In this embodiment the dust D is typically discarded and used outside the plant, e.g. as raw material in another plant for manufacturing C$A or as fertilizer. However, in case the plant in Figure 2 is used for making C$A, the dust D can be added to the raw materials and/or to the calciner and/or kiln to deliver some of the needed sulfur.

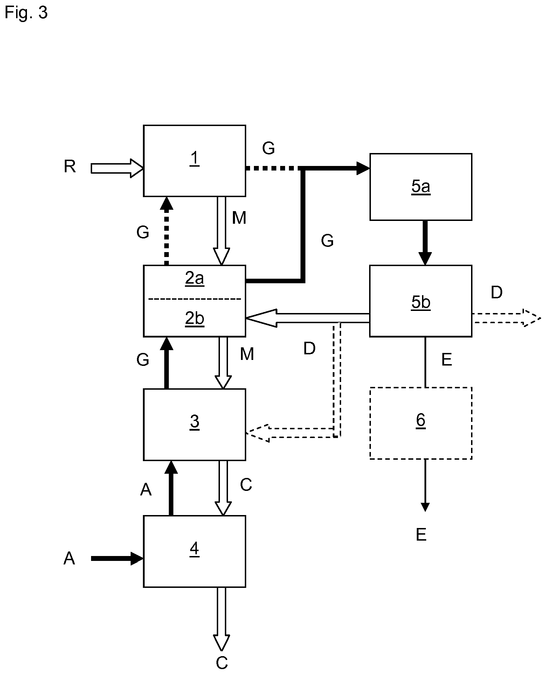

In the embodiment shown in Figure 3 the plant has no addition of ammonia for NOₓ reduction and relies on sulfur introduced with the raw material R and the feeding of dust D into the calciner/kiln/raw meal to adjust the SO₂ received in the conditioning unit 5a. The conditioning unit 5a is here a separate unit from the dedusting filter 5b. As indicated, the dust D can be fed directly to the calciner 2b or kiln 3. If necessary, dust D can be discharged. Otherwise, the plant in Figure 3 is the same as that in Figure 1.

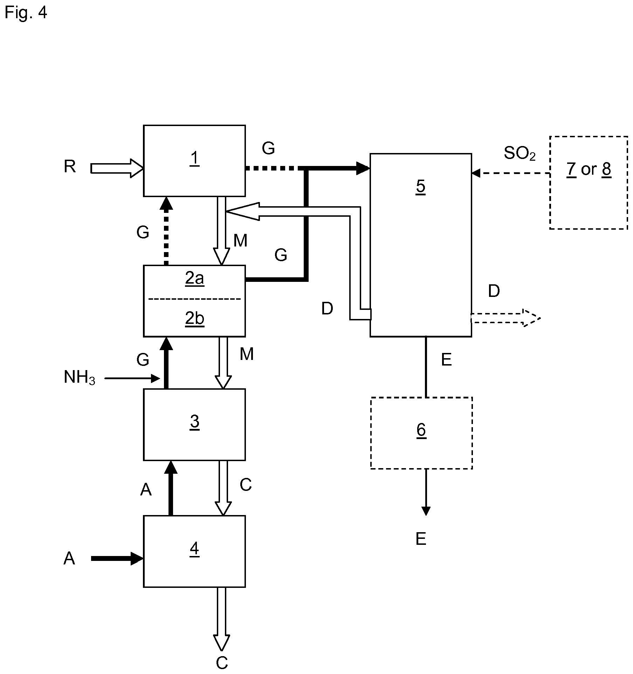

In the embodiment of Figure 4 the dust D is added to the raw meal M fed to the preheater/calciner 2. Addition to the raw material R is possible, but not preferred, since the dust D is fine enough and does not need grinding. Furthermore, like in the plant in Figure 2, ammonia or a material providing ammonia is fed to the air A passing from the kiln 3 into the preheater/calciner 2. The SO₂ is here predominantly provided by the raw materials R and the dust D. An additional amount can be provided into the conditioning unit 5 as shown with the dashed arrow. This comes e.g. from a reactor 7 or from a storage means 8. It can of course also be added at other points as described for the plant shown in Figure 2.

Naturally, many variations of the shown plants are possible as known in the state of the art. For example, the method according to the invention is also suitable for plants that work in the oxyfuel mode, i.e. recycle the exhaust gas E into the kiln 3. The preheater/calciner 2 can be fed with secondary air directly from the cooler 4 or, when that is used, from the tempering unit. Separate SCR and/or SNCR could be used. There could be only a preheater and the calcining takes place in the upper end of the kiln 3.

### List of reference numbers

- 1: raw material mill
- 2: preheater and calciner
- 2a: preheater
- 2b: calciner
- 3: kiln
- 4: cooler
- 5: conditioning unit integrated with dedusting filter
- 5a: conditioning unit
- 5b: dedusting filter
- 6: purification unit like wet scrubber
- 7: reactor
- 8: storage means

- A: air
- C: clinker
- D: dust
- E: exhaust gas
- G: gaseous stream
- M: raw meal
- R: raw material(s)

## Claims

1. Method for controlling an ammonia content in the exhaust gas (E) from a cement manufacturing plant wherein the gaseous stream (G) produced during sintering a raw meal (M) to form a cement clinker (C) is passed into a conditioning stage in which an amount of SO₂ is adjusted that suffices for reducing the ammonia content to a desired level by reaction of ammonia with SO₂ to form ammonium sulfur compounds which are separated from the gaseous stream (G) and captured in a dedusting filter (5, 5b) of the plant as solid material to provide the exhaust gas (E) with the desired level of ammonia content.

2. Method according to claim 1, wherein the ratio of SO₂ to ammonia is adjusted from 1:2.5 to 1:1.5, preferably from 1:2.2 to 1:1.8 and especially preferred from 1:2.1 to 1:1.9 in the conditioning stage.

3. Method according to claim 1 or 2, wherein the ammonium sulfur compounds are recycled into the raw meal (M) that enters the preheater/calciner (2) and/or the kiln (3), and/or into the burner of the kiln (3) and/or into the burner of the calciner (2b), and/or in meal pipes / gas ducts between preheater cyclones.

4. Method according to at least one of claims 1, 2 and 3, wherein a content of sulfur sources in the raw meal and/or in fuels burnt in the kiln (3) and/or calciner (2b) is adjusted so that a sufficient level of SO₂ is formed for reaction with ammonia in the conditioning stage.

5. Method according to at least one of claims 1 to 4, wherein SO₂ is generated by burning liquid or solid sulfur in a separate reactor (7) or SO₂ is provided from a storage means (8).

6. Method according to at least one of claims 1 to 5, wherein SO₂ is provided by substoichiometric burning of fuels in the kiln (3) and/or calciner (2b).

7. Method according to at least one of claims 1 to 6, wherein the conditioning stage is located in the dedusting filter (5).

8. Method according to at least one of claims 1 to 6, wherein the conditioning stage is located in a separate conditioning unit (5a) directly before the dedusting filter (5b).

9. Method according to at least one of claims 1 to 8, wherein an excess of SO₂ in the exhaust gas (E) after the conditioning stage is decreased with wet scrubbing.

10. Method according to at least one of claims 1 to 9, wherein NOₓ is reduced with selective non-catalytic reduction and/or selective catalytic reduction.

11. Method according to claim 10, wherein the ammonium sulfur compounds are used as at least one ammonia source for the selective non-catalytic reduction and/or selective catalytic reduction.

12. Method according to any one of claims 1 to 11, wherein the amount of SO₂ is adjusted by feeding SO₂ into a grinding stage for raw materials and/or into the conditioning stage.

13. Cement manufacturing plant comprising a raw material mill (1) for grinding a raw material (R) to provide a raw meal (M), a preheater (2a) or a preheater/calciner (2) for preheating or preheating and calcining the raw meal (M), a kiln (3) for sintering the raw meal (M) to a clinker (C), a cooler (4) for cooling the clinker (C) and a dedusting filter (5, 5b) for separating a gaseous stream (G) from the preheater (2) and/or the raw material mill (1) into a solid dust (D) and an exhaust gas (E), **characterized in that** a conditioning unit (5, 5a) receiving an adjusted amount of SO₂ and equipped with a device for measuring the content of ammonia and SO₂ in the gaseous stream (G) from the preheater (2) and/or the raw material mill (1) is arranged before the dedusting filter (5b) or made integral with the dedusting filter (5).

14. Cement manufacturing plant according to claim 13, **characterized in that** a purification unit (6), preferably a wet scrubber, is arranged after the dedusting filter (5, 5b).

15. Cement manufacturing plant according to claim 13 or 14, **characterized in that** it comprises a separate reactor (7) for generating SO₂ and/or a storage means (8) for SO₂ for supplying SO₂ that is received in the conditioning unit (5, 5a).

## Patentansprüche

1. Verfahren zum Kontrollieren eines Ammoniakgehalts im Abgas (E) eines Zementherstellungswerks, wobei der Gasstrom (G), der beim Sintern eines Rohmehls (M) zur Bildung eines Zementklinkers (C) entsteht, einer Konditionierungsstufe zugeführt wird, in der eine SO₂-Menge eingestellt wird, die ausreicht, um den Ammoniakgehalt durch Umsetzung von Ammoniak mit SO₂ zu Ammoniumschwefelverbindungen, die aus dem Gasstrom (G) abgetrennt und in einem Entstaubungsfilter (5, 5b) des Werks als Feststoff aufgefangen werden, auf ein gewünschtes Niveau zu senken, um das Abgas (E) mit dem gewünschten Ammoniakgehalt zu erhalten.

2. Verfahren gemäß Anspruch 1, wobei das Verhältnis von SO₂ zu Ammoniak in der Konditionierungsstufe auf 1: 2,5 bis 1: 1,5, bevorzugt von 1: 2,2 bis 1: 1,8 und besonders bevorzugt von 1: 2,1 bis 1: 1,9 eingestellt wird.

3. Verfahren gemäß Anspruch 1 oder 2, wobei die Ammoniumschwefelverbindungen in das Rohmehl (M) zurückgeführt werden, das in den Vorwärmer/Kalzinator (2) und/oder den Ofen (3) und/oder in den Brenner des Ofens (3) und/oder in den Brenner des Kalzinators (2b) und/oder in Mahlgutleitungen/Gaskanäle zwischen Vorwärmerzyklonen eintritt.

4. Verfahren gemäß mindestens einem der Ansprüche 1, 2 und 3, wobei ein Gehalt an Schwefelquellen im Rohmehl und/oder in Brennstoffen, die in dem Brennofen (3) und/oder Kalzinator (2b) verbrannt werden, so eingestellt wird, dass in der Konditionierungsstufe ein ausreichender SO₂-Gehalt zur Reaktion mit Ammoniak gebildet wird.

5. Verfahren gemäß mindestens einem der Ansprüche 1 bis 4, wobei SO₂ durch Verbrennen von flüssigem oder festem Schwefel in einem separaten Reaktor (7) erzeugt wird oder SO₂ aus einem Speichermittel (8) bereitgestellt wird.

6. Verfahren gemäß mindestens einem der Ansprüche 1 bis 5, wobei SO₂ durch unterstöchiometrisches Verbrennen von Brennstoffen im Ofen (3) und/oder Kalzinator (2b) bereitgestellt wird.

7. Verfahren gemäß mindestens einem der Ansprüche 1 bis 6, wobei sich die Konditionierungsstufe im Entstaubungsfilter (5) befindet.

8. Verfahren gemäß mindestens einem der Ansprüche 1 bis 6, wobei sich die Konditionierungsstufe in einer separaten Konditionierungseinheit (5a) direkt vor dem Entstaubungsfilter (5b) befindet.

9. Verfahren gemäß mindestens einem der Ansprüche 1 bis 8, wobei ein Überschuss an SO₂ im Abgas (E) nach der Konditionierungsstufe durch Nasswäsche verringert wird.

10. Verfahren gemäß mindestens einem der Ansprüche 1 bis 9, wobei NOₓ durch selektive nichtkatalytische Reduktion und/oder selektive katalytische Reduktion reduziert wird.

11. Verfahren gemäß Anspruch 10, wobei die Ammoniumschwefelverbindungen als mindestens eine Ammoniakquelle für die selektive nichtkatalytische Reduktion und/oder die selektive katalytische Reduktion verwendet werden.

12. Verfahren gemäß einem der Ansprüche 1 bis 11, wobei die SO₂-Menge durch Einspeisen von SO₂ in eine Mahlstufe für Rohmaterialien und/oder in die Konditionierungsstufe eingestellt wird.

13. Zementherstellungswerk mit einer Rohstoffmühle (1) zum Mahlen eines Ausgangsmaterials (R) zur Bereitstellung eines Rohmehls (M), einem Vorwärmer (2a) oder einem Vorwärmer/Kalzinator (2) zum Vorwärmen oder Vorwärmen und Kalzinieren des Rohmehls (M), einem Ofen (3) zum Sintern des Rohmehls (M) zu einem Klinker (C), einem Kühler (4) zum Kühlen des Klinkers (C) und einem Entstaubungsfilter (5, 5b) zum Auftrennen eines Gasstroms (G) vom Vorwärmer (2) und/oder der Rohstoffmühle (1) in einen festen Staub (D) und ein Abgas (E), **dadurch gekennzeichnet, dass** eine Konditioniereinheit (5, 5a), die eine eingestellte Menge von SO₂ erhält und mit einer Vorrichtung zur Messung des Gehalts an Ammoniak und SO₂ im Gasstrom (G) aus dem Vorwärmer (2) und/oder der Rohstoffmühle (1) ausgestattet ist, vor dem Entstaubungsfilter (5b) angeordnet oder einteilig mit dem Entstaubungsfilter (5) ausgeführt ist.

14. Zementherstellungswerk gemäß Anspruch 13, **dadurch gekennzeichnet, dass** nach dem Entstaubungsfilter (5, 5b) eine Reinigungseinheit (6), vorzugsweise ein Nasswäscher, angeordnet ist.

15. Zementherstellungswerk gemäß Anspruch 13 oder 14, **dadurch gekennzeichnet, dass** es zur Zufuhr von SO₂, das in der Konditioniereinheit (5, 5a) aufgenommen wird, einen separaten Reaktor (7) zur Erzeugung von SO₂ und/oder ein Speichermittel (8) für SO₂ umfasst.

## Revendications

1. Procédé de régulation d'une teneur en ammoniac dans le gaz d'échappement (E) provenant d'une installation de fabrication de ciment, dans lequel le courant gazeux (G) produit au cours du frittage d'une farine crue (M) pour former un clinker de ciment (C) est amené à passer dans un étage de conditionnement dans lequel on ajuste une quantité de SO₂ qui est suffisante pour réduire la teneur en ammoniac à un niveau souhaité par mise en réaction de l'ammoniac avec du SO₂ pour former des composés de sulfure d'ammonium qui sont séparés du courant gazeux (G) et capturés dans un filtre dépoussiéreur (5, 5b) de l'installation sous forme de matière solide pour fournir au gaz d'échappement (E) le niveau souhaité de teneur en ammoniac.

2. Procédé selon la revendication 1, dans lequel le rapport de SO₂ à ammoniac est ajusté entre 1:2,5 et 1:1,5, de préférence entre 1:2,2 et 1:1,8 et de manière particulièrement préférée entre 1:2,1 et 1:1,9 dans l'étage de conditionnement.

3. Procédé selon la revendication 1 ou 2, dans lequel les composés de sulfure d'ammonium sont recyclés dans la farine crue (M) qui entre dans le four de préchauffage/calcination (2) et/ou le four (3) et/ou dans le brûleur du four (3) et/ou dans le brûleur du four de calcination (2b) et/ou dans des tuyaux de farine/conduits de gaz entre des cyclones de préchauffage.

4. Procédé selon au moins l'une des revendications 1, 2 et 3, dans lequel la teneur en sources de soufre dans la farine crue et/ou dans les combustibles brûlés dans le four (3) et/ou le four de calcination (2b) est ajustée de sorte qu'un niveau suffisant de SO₂ soit formé pour la mise en réaction avec l'ammoniac dans l'étage de conditionnement.

5. Procédé selon au moins l'une des revendications 1 à 4, dans lequel le SO₂ est généré en brûlant du soufre liquide ou solide dans un réacteur séparé (7) ou le SO₂ est fourni à partir d'un moyen de stockage (8).

6. Procédé selon au moins l'une des revendications 1 à 5, dans lequel le SO₂ est fourni en brûlant de façon sous-stœchiométrique des combustibles dans le four (3) et/ou le four de calcination (2b).

7. Procédé selon au moins l'une des revendications 1 à 6, dans lequel l'étage de conditionnement est situé dans le filtre dépoussiéreur (5).

8. Procédé selon au moins l'une des revendications 1 à 6, dans lequel l'étage de conditionnement est situé dans une unité de conditionnement séparée (5a) directement avant le filtre dépoussiéreur (5b).

9. Procédé selon au moins l'une des revendications 1 à 8, dans lequel un excès de SO₂ dans le gaz d'échappement (E) après l'étage de conditionnement est diminué par épuration par voie humide.

10. Procédé selon au moins l'une des revendications 1 à 9, dans lequel le NOₓ est réduit par réduction non catalytique sélective et/ou réduction catalytique sélective.

11. Procédé selon la revendication 10, dans lequel les composés de sulfure d'ammonium sont utilisés en tant qu'au moins une source d'ammoniac pour la réduction non catalytique sélective et/ou la réduction catalytique sélective.

12. Procédé selon l'une quelconque des revendications 1 à 11, dans lequel la quantité de SO₂ est ajustée en introduisant du SO₂ dans un étage de broyage pour les matières premières et/ou dans l'étage de conditionnement.

13. Installation de fabrication de ciment comprenant un broyeur de matière première (1) pour broyer une matière première (R) pour fournir une farine crue (M), un four de préchauffage (2a) ou un four de préchauffage/calcination (2) pour le préchauffage ou le préchauffage et la calcination de la farine crue (M), un four (3) pour le frittage de la farine crue (M) en un clinker (C), un refroidisseur (4) pour refroidir le clinker (C) et un filtre dépoussiéreur (5, 5b) pour séparer un courant gazeux (G) provenant du four de préchauffage (2) et/ou du broyeur de matière première (1) en une poussière solide (D) et un gaz d'échappement (E), **caractérisée en ce qu'**une unité de conditionnement (5, 5a) recevant une quantité ajustée de SO₂ et équipée d'un dispositif de mesure de la teneur en ammoniac et en SO₂ dans le courant gazeux (G) provenant du four de préchauffage (2) et/ou du broyeur de matière première (1) est agencée avant le filtre dépoussiéreur (5b) ou rendue solidaire du filtre dépoussiéreur (5).

14. Installation de fabrication de ciment selon la revendication 13, **caractérisée en ce qu'**une unité de purification (6), de préférence un épurateur par voie humide, est agencée après le filtre dépoussiéreur (5, 5b).

15. Installation de fabrication de ciment selon la revendication 13 ou 14, **caractérisée en ce qu'**elle comprend un réacteur séparé (7) pour générer du SO₂ et/ou un moyen de stockage (8) pour le SO₂ pour l'alimentation en SO₂ qui est reçu dans l'unité de conditionnement (5, 5a).
